# EUROPEAN PATENT SPECIFICATION

(11) **EP 3 657 523 B1**
(45) Date of publication and mention of the grant of the patent: **26.10.2022**
(21) Application number: 19210933.8
(22) Date of filing: 22.11.2019
(51) Int. Cl.: H01H 47/00, H01H 71/00, H01H 51/27, G06F 1/3209, H01H 47/32

(54) **LOAD SWITCH**
LASTUMSCHALTER
COMMUTATEUR DE CHARGE

(30) Priority: 23.11.2018 CN 201811408362
(43) Date of publication of application: 27.05.2020
(73) Proprietor: Schneider Electric Industries SAS, 92500 Rueil Malmaison (FR)
(72) Inventor: TIAN, Simon, 38320 Eybens (FR); ZHANG, Fenglian, Shanghai, Shanghai 201203 (CN)
(74) Representative: Manitz Finsterwald Patent- und Rechtsanwaltspartnerschaft mbB

(56) References cited:
- US-A1- 2015 220 138
- US-A1- 2017 053 762
- US-A1- 2017 271 904
- US-B1- 9 467 754

## Description

### FIELD

The present disclosure generally relates to a switching device, and more specifically, to a load switch.

### BACKGROUND

At present, as smart devices such as smart phones become increasingly popular, there is more demand for intelligent appliances. Under this trend, people demand more for intellectualization of switching devices such as contactors, load switches, and the like, and especially household switching devices. To achieve the intellectualization, a wireless module is typically necessary to be installed to enable the intelligent device to remotely control the switching devices.

What's more, security cannot be reduced despite that switching devices are intellectualized. For example, in consideration of problems such as heat dissipation and the like, at present, in order to control switching devices such as a contactor in a wireless manner, an additional control module is required nearby the contactor to constitute a smart contactor assembly. Inevitably, the smart contactor assembly occupies a large volume due to such an additional control module, making a control box of the switching device which is relatively cramped more crowded. As a result, problem concerning electrical safety is arisen.

US 2017 / 271 904 A1 relates to a method and apparatus for switching AC power to a lamp (or other load) via a two terminal switch device. The switch device comprises a first electrically controlled switch, such as a triac or relay, and a second electrically controlled resistance or switch connected in series to the first switch. A diode is connected in parallel to the second switch. When the first switch is open, only a leakage current is flowing through the switch device, supplied to an AC/DC converter for producing a low DC voltage to the switch device logic and other low-voltage circuits and for charging a capacitor. When the first switch is closed, the second switch is controlled to be conductive for allowing powering the lamp from the AC power. During part of a positive half-cycle of the AC voltage, a closed loop regulates a DC voltage over the second switch terminals for providing a low DC voltage for charging a capacitor. At least during a negative half-cycle of the AC voltage, the low DC voltage is provided from the capacitor.

US 2017 / 053 762 A1 relates to an electro-mechanical relay with at least one pair of switchable electrical contacts includes a wireless communications control function. The wireless communications control function may be a receiver or a transceiver and may be within a relay housing. A cloud server may be connected, via the Internet or wirelessly via a router, in data communication with one or more process locations. Each process location comprises one or more relays capable of receiving wireless communications from a router. The router/wireless interface in wireless communication with a local plant system to transmit control signals from the building management system to the local plant system for controlling the operation of equipment within the local plant. The relays are configured to wirelessly receive operational instructions and to provide operational feedback information to the building management system.

US 9 467 754 B1 relates to a communications and control system for use with a utility meter includes a first wireless communications subsystem for exchanging messages with a central facility via a cellular communications network. The first wireless communications system is operable to send messages including meter data generated by the utility meter to the central facility and receive utility control messages from the central facility for controlling the provision of a utility monitored by the utility meter. A second wireless subsystem communicates within a wireless mesh network of compatible wireless subsystems operating in conjunction with a set of utility meters for exchanging the meter data with a selected compatible wireless subsystem within the mesh network.

US 2015 / 220 138 A1 relates to a smart power management unit (SPMU) apparatus and method of intelligently switching from a "disconnect mode" to a "connect mode" in regards to power-supplying to a paired downstream load device by programmatically monitoring whether there is change in state of the manual switch of the load device, is provided. The SPMU comprises relay module configured to operate in either operation mode (connect mode) or monitor mode (disconnect mode), and controller module configured to determine the operating mode of relay module. When in monitor mode, relay module is configured to disconnect the power supply from the load device while simultaneously enable a monitoring means configured to monitor a change in state of the manual switch. Upon monitoring a change in state of the manual switch based on a response signal supplied from the monitoring means, the controller module switches the relay module from monitor mode to operation mode.

### SUMMARY

Existing technical solutions for implementing wireless intelligent contactors typically require double volume occupied by the original contactor. The contactor manufactured in this way not only takes up a large volume, but also achieves a relatively simple function, resulting in a poor cost-effectiveness. Moreover, the additional control modules also lead to the cumbersome wiring during assembly or installation of such contactors, which may result in safety problems or malfunctions.

These problems are solved by the subject matter of claim 1. Further embodiments are decribed in the subclaims.

In a exemplary aspect of the present disclosure, a load switch is provided. The load switch comprises a wireless transmission circuit configured to generate a first control signal in response to a control command signal from a remote device; a control circuit coupled to the wireless transmission circuit and configured to generate a second control signal in response to a reception of the first control signal from the wireless transmission circuit; a switching circuit coupled to the control circuit and comprising a relay disposed in a circuit, the switching circuit being configured to control a state of the circuit by controlling contacts of the relay in response to a reception of the second control signal.

The load switch according to embodiments of the present disclosure enables intelligent wireless control while keeping miniaturization of the load switch by using the relay as a main part of the switch circuit and by using the wireless transmission circuit. The load switch achieves intelligent wireless control with the same size as a conventional common contactor. In addition, in this way, the wiring is also simple, and only needs to be connected like a conventional ordinary contactor, improving both user experience and safety of electricity.

In some embodiments, the relay comprises a bistable relay capable of withstanding short circuit currents. With the bistable relay, the power consumption is further decreased, so that the volume can be further reduced. In addition, the bistable relay capable of withstanding short-circuit currents allows the contacts of the relay to be in closer contact in the event of a short circuit. Then the circuit is opened by the circuit breaker, causing the load switch safer and longer lasting.

According to the invention, the load switch further comprises a circuit state detecting circuit coupled to the circuit and the control circuit, and configured to obtain a value of voltage or current on the circuit and provide a signal regarding the state of the circuit to the control circuit according to the obtained value of the voltage or current. With the circuit state detecting circuit, the relay can be controlled according to the circuit state, thereby a closed loop control mode is achieved. In this way, the control performance becomes better and safer. In addition, the circuit state detecting circuit is also capable of detecting a state of the fusion welding of the contacts, so that the load switch can be replaced in time when the fusion welding occurs so as to improve the power safety.

In some embodiments, the load switch further comprises a state indication circuit coupled to the control circuit and configured to indicate at least one of: the state of the circuit, an operating state of a wireless transmission circuit and states of the contacts. In this way, the user is able to have a clearer understanding of the state of the load switch, improving user experience and safety.

In some embodiments, the load switch further comprises a metering component comprising: an acquisition circuit coupled to the circuit and configured to acquire at least one of voltage and current on the circuit and generate a corresponding analog signal; an analog-digital conversion circuit coupled to the acquisition circuit and configured to receive the analog signal and generate a signal indicative of at least one of the voltage and current in a form of a digital signal. By means of the metering component, user can have a more comprehensive understanding of the electric usage, thereby enriching the function of the load switch and satisfying the user's demand for power consumption information.

In some embodiments, the metering component further comprises a display unit coupled to the analog-digital conversion circuit and configured to display the digital signal. In this way, the user can know the electric usage directly from the display unit, which further improves the user experience.

In some embodiments, the acquisition circuit comprises a current measurement coil coupled to the circuit. In this way, the current can be measured while maintaining a compact volume

In some embodiments, the load switch further comprises a contact state detecting circuit coupled to the relay and configured to obtain a value of resistances of the contacts and generate a signal regarding states of the contacts according to the obtained value of the resistance. In this way, the load switch can obtain the contact state of the relay, and notify the user to replace the load switch when the contact state becomes worse, thereby improving the safety of power consumption.

In some embodiments, the contact state detecting circuit comprises a temperature sensor coupled to the contacts and configured to obtain the value of the resistance by detecting temperatures of the contacts. In this way, the contact state can be monitored in a low-cost and easy-to-install mode, which increases the cost-effectiveness of the load switch.

In some embodiments, the load switch further comprises a signal amplification circuit coupled between the control circuit and the switching circuit and configured to amplify the second control signal to control the contacts of the relay with the amplified second control signal. In this way, effective control to the contacts of the relay can be achieved more efficiently.

In some embodiments, the load switch further comprises a wired transmission circuit coupled to the circuit and the control circuit through a connection line and comprising a switching unit capable of generating a third control signal, and wherein the control circuit is further configured to generate the second control signal in response to a reception of the third control signal from the wired transmission circuit. With the wired transmission circuit, the load switch can be wirelessly controlled while realizing local wired control, which expands the control mode and improves the safety of the load switch.

In some embodiments, the second control signal or the third control signal comprises at least one of a pulse signal and a level signal. The configuration enables more flexible control of the load switch.

In some embodiments, the load switch further comprises a button coupled to the control circuit; and the control circuit is further configured to generate the second control signal based on a pressing state of the button. The button enables easier and safer control of the load switch and improves the safety of the load switch.

It should be understood that the invention is not to determine key features or basic feature of the present disclosure and not intended to limit the scope of the disclosure. Other features of the present disclosure will become readily apparent from the description.

### BRIEF DESCRIPTION OF THE DRAWINGS

Through the following detailed description with reference to the accompanying drawings, the above and other objectives, features, and advantages of example embodiments of the present disclosure will become more apparent. In the example embodiments of the present disclosure, the same reference numerals are used to refer to the same or similar elements.
FIG.1 shows a circuit diagram of a load switch in accordance with an embodiment of the present disclosure;
FIG.2 shows a circuit diagram of a load switch in accordance with a further embodiment of the present disclosure;

Throughout the drawings, the same or similar reference numerals are used to refer to the same or similar elements.

### DETAILED DESCRIPTION OF EMBODIMENTS

The present disclosure will now be described with reference to a few exemplary embodiments. It should be appreciated that description of those embodiments is merely to enable those skilled in the art to better understand and further implement example embodiments disclosed herein and is not intended for limiting the scope disclosed herein in any manner.

As used herein, the term "includes" and its variants are to be read as open-ended terms that mean "includes, but is not limited to." The term "based on" is to be read as "based at least in part on." The term "one example embodiment" and "an example embodiment" are to be read as "at least one example embodiment." The term "another embodiment" is to be understood as "at least one other embodiment." The terms "first," "second," and the like may refer to different or identical objects. Other explicit and implicit definitions may be included below. Unless the context clearly indicates otherwise, the definition of a term is consistent throughout the specification.

With the increasing demand for intelligent household appliances, a contactor assembly capable of wirelessly controlling the contactor has been developed. The contactor assembly requires an additional control module of the same size as the contactor mounted to a conventional contactor, which causes the contactor assembly to take up twice as much space as a conventional contactor. As a result, the user's switching device box is more crowded, affecting the aesthetics and electrical safety. In addition, the contactor assembly is complicated in wiring and difficult to assemble, increasing material and assembly cost. And the contactor assembly has a single function and a poor user experiences.

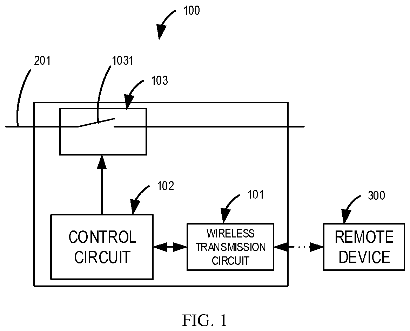

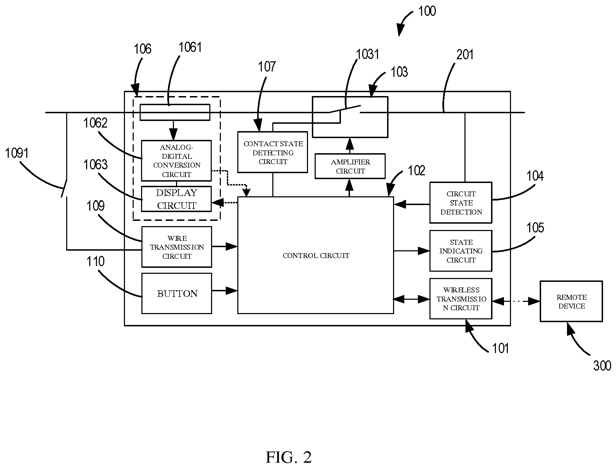

Embodiments of the present disclosure provide a load switch 100 to address or at least partially address the above-discussed problems and/or other potential problems of conventional load switches. Some example embodiments will now be described with reference to FIGS. 1 and 2.

FIG.1 shows a circuit diagram of a load switch 100 in accordance with an embodiment of the present disclosure. The load switch 100 comprises a wireless transmission circuit 101, a control circuit 102, and a switching circuit 103. The wireless transmission circuit 101 is capable of receiving control command signals from a remote device 300 such as a mobile phone, tablets, and the like. In some embodiments, the wireless transmission circuit 101 can receive control command signals from remote device 300 via a ZigBee protocol. ZigBee is a low-power local aera network (LAN) protocol based on the IEEE802.15.4 standard, which is featured by low power consumption, long signal transmission distance and low latency. The power consumption of the load switch 100 can be further reduced with the transmission employing the ZigBee protocol.

Of course, it is to be understood that the above embodiments regarding the wireless transmission circuit 101 employing the ZigBee protocol are merely for illustrative and are not intended to limit the scope of the disclosure. Any other suitable transmission methods or transmission protocols are also possible. For example, in some alternative embodiments, the wireless transmission circuit 101 may also employ Bluetooth, Wi-Fi, or infrared transmission.

The wireless transmission circuit 101 is capable of generating a control signal in response to a control command signal, which is hereinafter referred to as a first control signal for ease of discussion. A control circuit 102 is coupled to the wireless transmission circuit 101 and is capable of generating a second control signal in response to receiving the first control signal. In some embodiments, the control circuit 102 may be coupled to the wireless transmission circuit 101 through a certain circuit. That is, the control circuit 102 and the wireless transmission circuit 101 employ separate circuits, which are connected by a circuit. In some alternative embodiments, the wireless transmission circuit 101 may also be integrated in the control circuit 102. For example, the control circuit 102 may be a central processor integrated with the wireless transmission circuit 101.

A switching circuit 103 is coupled to the control circuit 102, which includes a relay 1031 arranged in a circuit 201. The switching circuit 103 can control operation of the contacts of the relay 1031 to control the state of the circuit 201 upon receiving the second control signal. For example, by pressing or touching the "power on" button displayed on the mobile phone or its touch screen, the mobile phone sends a corresponding "power on" control command signal to the wireless transmission circuit 101. The wireless transmission circuit 101 generates the corresponding first control signal regarding "power on" according to the control command signal. The first control signal is transmitted to the control circuit 102 which generates the second control signal and sends the second control signal to the switching circuit 103. The switching circuit 103 controls the operation of the contacts accordingly to turn on the circuit 201.

It is to be understood that the circuit 201 herein refers to the minimum unit in the line that needs to perform the corresponding operation. For example, the circuit 201 may refer to a phase in a circuit. For example, in some countries and regions, the load needs to be powered through positive and negative phases. In this case, the circuit 201 may refer to one of the two phases. That is to say, for each phase, a relay 1031 is required to turn on and off the phase, and thus the line needs two relays operated simultaneously to turn on and off.

Further, various circuits such as the wireless transmission circuit 101, the control circuit 102, and the switching circuit 103 in the load switch 100, and a circuit state detecting circuit 104, a signal amplifying circuit 108 which will be discussed later may be supplied by a power module coupled to the circuit 201. In addition, a power module such as a rechargeable battery may also be provided to supply power to at least some of the above circuits, which can improve the reliability of the load switch 100. In some embodiments, a combination of a rechargeable battery and a power module coupled to the circuit 201 may also be used to supply power to the various circuits described above for further improving reliability.

The load switch 100 according to embodiments of the present disclosure enables the wireless intelligent control while miniaturizing the load switch 100 by introducing the wireless transmission circuit 101 and the relay 1031. In some electrical applications, especially in household applications, where the on/off operation of the contacts is not particularly frequent, the relays fully meet the requirements and ensure safety. Combined with a circuit breaker, the load switch 100 can achieve a safe and reliable circuit control system. In addition, the miniaturized wireless smart load switch 100 boats a simple circuit, which makes wiring easy, reduces material and assembly costs, and thereby increases cost efficiency.

In some embodiments, the circuit breaker 1031 may employ a bistable relay that can withstand short circuit currents. The bistable relay can further reduce power consumption, thereby reducing the volume of the load switch 100 which requires only the same volume of a conventional contactor to achieve wireless intelligent control of the switching device. Furthermore, with a relay capable of withstanding short-circuit currents, the contacts of the relay can be brought into closer contact when a short circuit occurs in the circuit 201 and then the circuit can be turned off by the circuit breaker. Such a configuration can effectively prevent arcing in the relay 1031, improving safety and the life of the relay 1031 and even the entire load switch 100. Of course, in some alternative embodiments, the load switch 100 may also employ a monostable relay.

In some embodiments, as shown in FIG. 2, the load switch 100 may also comprise a circuit state detecting circuit 104 coupled to the circuit 201 and the control circuit 102. The circuit state detecting circuit 104 can detect the on-off state of the circuit 201. For example, the circuit state detecting circuit 104 can provide a signal regarding the state of the circuit 201 to the control circuit 102 by obtaining voltage or current of the circuit 201.

In accordance with the invention, the circuit state detecting circuit 104 is configured to detect a state of fusion welding of the contacts of the relay 1031. For example, after the circuit is turned off according to the control command signal, if the obtained current or voltage value indicating that the circuit 201 is still not disconnected, it is determined that the contacts may be in a state of fusion welding and thereby the user may be notified. In this event, the user can replace the load switch 100 in time, which ensures safe use of electricity.

In some embodiments, the above-described on-off state of the circuit 201 and the state of fusion welding of the contacts may be indicated by a state indicating circuit 105 coupled to the control circuit 102. In addition, the state indicating circuit 105 may also indicate the operating state of the wireless transmission circuit 101. For example, the state that the wireless transmission circuit 101 is initialized, the wireless transmission circuit 101 is connected to the remote device 300, and the wireless transmission circuit 101 is in a state of data transmission with the remote device 300 may be indicated. The above states may also be transmitted to the remote device 300 of the user via the wireless transmission circuit 101, for example, by displaying the above state at a corresponding interface of the remote device 300. This allows the user to know the state of the circuit and the contacts in a timely manner, further improving the user experience and electrical safety.

The state indicating circuit 105 may comprise a light emitting diode (LED) indicator light located on the housing. The above states are indicated by on an off of the LED indicator light, a change in the blinking frequency, a color change, or the like. In some alternative embodiments, the state indicating circuit 105 may also comprise a display screen arranged on the housing to display the various states described above on the screen in a more intuitive manner.

In some embodiments, the load switch 100 may also comprise a metering component 106. The metering component 106 can acquire current, voltage, and electricity consumption of the current circuit 201. The metering component 106 may include an acquisition circuit 1061 and an analog-digital conversion circuit 1062. The acquisition circuit 1061 is coupled to the circuit 201, which is capable of acquiring at least one of current and voltage on the circuit and generating a corresponding analog signal and transmitting the signal to the analog-digital conversion circuit 1062. The analog-digital conversion circuit 1061 can convert the received analog signal into a digital signal and generate a signal indicating at least one of voltage and current in the form of a digital signal.

The analog-digital conversion circuit 1061 may be coupled to the control circuit 102 which may thereby transmit information about current, voltage or electricity consumption to the user's remote device 300 over the wireless transmission line 102 in accordance with the digital signal provided by the analog-digital conversion circuit 1061. The remote device 300 can display this information in a corresponding interface, which enables the user to know the above information in time, thereby improving the user experience.

In some embodiments, the metering component 106 may include a display unit 1063 coupled to the analog-digital conversion circuit 1062. The display unit 1063 can display the digital signal provided by the analog-digital conversion unit 1062 for the user. The display unit 1063 can be in a sleep state, and displays the information about voltage or current when the user pushes a button. This further reduces power consumption.

The display unit 1063 may also display the acquired information about current or voltage in the form of a waveform diagram, so that the user can have a more intuitive understanding of the circuit. In some embodiments, current of the circuit 201 may be measured by a current measuring coil coupled to the circuit 201. Of course, this is merely for illustrative and is not intended to limit the scope of the disclosure. Any other suitable acquisition methods of voltage and/or current may also be employed. For example, the voltage and/or current may be acquired by providing a resistor or a capacitor.

In some embodiments, the load switch 100 may also comprise a contact state detecting circuit 107. The contact state detecting circuit 107 is coupled to the relay and is capable of obtaining a value of a resistance of the contact and generating a signal of the states of the contacts based on the value of the resistance. It is well known that as continuous opening and closing of the contacts, the coating and the size and attachment thereon will increase the resistance. An increase in resistance will increase heat. If it is not monitored in time, a fire hazard may be caused. With the contact state detecting circuit 107, the states of the contacts are monitored in time and the user is notified in time to replace the contacts when a problem occurs, which improves the reliability of the load switch 100.

In some embodiments, the contact state detecting circuit 107 may comprise a temperature sensor coupled to the contacts. As mentioned earlier, as the number of opening and closing increases, the resistance of the contacts increases, which leads to an increase in the temperatures of the contacts. The change in the resistance of the contact can thus be obtained by a temperature sensor arranged on the contact. This approach monitors contacts in a cost-effective manner.

For example, a certain temperature threshold may be set. A detection of the temperatures on the contacts being higher than the threshold indicates that the contacts have been worn to the extent that it needs to be replaced and the user is notified in a corresponding manner. In addition, the change in the resistances of the contacts are also for the temperatures of the contacts not to be too high, and thus such a method of directly detecting the temperature can more directly obtain the states of the contacts.

The signal regarding the states of the contacts may be indicated by the state indicating circuit 105 or the display unit 1062 described above. For example, in the case where the contacts have worn out to be replaced as soon as possible, it can be indicated by the red light that blinks at a predetermined frequency at the LED indicator of the state indicating circuit 105.

In some embodiments, in order to enable the second control signal of the control circuit 102 to more efficiently drive the contacts, a signal amplification circuit 108 may be provided between the control circuit 102 and the switching circuit 103. The second control signal may be amplified by the signal amplifying circuit 108 and directly applied to the switching circuit 103 to effectively control the operation of the contacts.

In addition to the wireless control mentioned above, in order to facilitate user's quick control of the load switch 100 locally, in some embodiments, the load switch 100 may include a wired transmission circuit 109. The wired transmission circuit 109 is coupled to the circuit 201 and the control circuit 102 through a connection line and comprises a switching unit 1091. The switching unit 1091 is capable of generating a third control signal, from which the he control circuit 102 can generate a second control signal.

This enables the user to locally control the load switch 100 through the control switching unit 1091. In the case where the wireless circuit module 101 is faulty or unavailable, particularly in the case where circuit needs to be cut off by the load switch 100 immediately, such an approach can quickly control the load switch 100 to cut off the circuit, improving the safety and stability of the load switch 100.

The third control signal herein may be a pulse signal. For example, the switching unit 1091 can generate a high level pulse after being pressed and the control unit 102 can generate a second control signal according to the pulse signal. Of course, in some alternative embodiments, the third control signal may also be a level signal. For example, the switching unit 1091 may be a level signal that uniformly maintains a high level or a low level after being pressed, and the control unit 102 may generate a second control signal according to the level signal. The second control signal may also be similar to the third control signal described above, that is, the second control signal may also be a level signal or a pulse signal.

Of course, the above embodiments regarding the third control signal and the second control signal belonging to a level signal or a pulse signal are merely for illustrative, and are not intended to limit the scope of protection of the present disclosure. Any other suitable signals are possible. For example, in some alternative embodiments, the third control signal and the second control signal may also be a certain level that is maintained for a certain time, resulting in a more flxible control of the load switch 100.

As can be seen from the above description, the load switch 100 according to embodiments of the present disclosure can realize wireless intelligent control with a small volume, which fully satisfies the needs of a specific application, particularly at home. In addition, the load switch 100 may also monitor and acquire the information about the states of circuit and the contacts, and the voltage and current of the circuit and display them to the user through the state indication circuit, the display circuit or the mobile terminal. In this way, the user can know information of the circuit 201 and the load switch 100 in time, improving both user experience and safety of electricity.

It is to be understood that the above detailed description of the present disclosure is intended to illustrate or explain the principle of the present disclosure but not limit the disclosure. Therefore, any modifications, equivalent substitutions, and improvements are possible to be made, without departing from the scope of the present invention, which is defined by the appended claims.

## Claims

1. A load switch (100), comprising:
a wireless transmission circuit (101) configured to generate a first control signal in response to a control command signal from a remote device (300);
a control circuit (102) coupled to the wireless transmission circuit (101) and configured to generate a second control signal in response to a reception of the first control signal from the wireless transmission circuit (101);
a switching circuit (103) coupled to the control circuit (102) and comprising a relay (1031) disposed in a circuit (201), the switching circuit (103) being configured to control a state of the circuit (201) by controlling contacts of the relay (1031) in response to reception of the second control signal,
**characterized in that**,
the load switch (100) further comprises a circuit state detecting circuit (104) coupled to the circuit (201) and the control circuit (102), and configured to obtain a value of voltage or current on the circuit (201) and provide a signal regarding the state of the circuit (201), including a state of fusion welding of contacts of the relay (1031), to the control circuit (102) according to the obtained value of the voltage or current.

2. The load switch (100) of claim 1, wherein the relay (1031) comprises a bistable relay capable of withstanding short circuit currents.

3. The load switch (100) of claim 1, further comprising a state indication circuit (105) coupled to the control circuit (102) and configured to indicate at least one of: the state of the circuit (201), an operating state of the wireless transmission circuit (101) and states of the contacts.

4. The load switch (100) of claim 1, further comprising a metering component (106), the metering component (106) comprising:
an acquisition circuit (1061) coupled to the circuit (201) and configured to acquire at least one of voltage and current on the circuit (201) and generate a corresponding analog signal;
an analog-digital conversion circuit (1062) coupled to the acquisition circuit (1061) and configured to receive the analog signal and generate a signal indicative of at least one of the voltage and current in a form of a digital signal.

5. The load switch (100) of claim 4, wherein the metering component further comprises a display unit (1063) coupled to the analog-digital conversion circuit (1062) and configured to display the digital signal.

6. The load switch (100) of claim 4, wherein the acquisition circuit (1061) comprises a current measurement coil coupled to the circuit (201).

7. The load switch (100) of claim 1, further comprising a contact state detecting circuit (107) coupled to the relay (1031) and configured to obtain values of resistances of the contacts and generate a signal regarding states of the contacts according to the obtained value of the resistance.

8. The load switch (100) of claim 7, the contact state detecting circuit (107) comprising a temperature sensor coupled to the contacts and configured to obtain the value of the resistance by detecting temperatures of the contacts.

9. The load switch (100) of claim 1, further comprising a signal amplification circuit (108) coupled between the control circuit (102) and the switching circuit (103) and configured to amplify the second control signal to control the contacts of the relay (1031) with the amplified second control signal.

10. The load switch (100) of claim 1, further comprising a wired transmission circuit (109) coupled to the circuit (201) and the control circuit (102) through a connection line and comprising a switching unit (1091) capable of generating a third control signal, and
wherein the control circuit (102) is further configured to generate the second control signal in response to a reception of the third control signal from the wired transmission circuit (109).

11. The load switch (100) of claim 10, wherein the second control signal or the third control signal comprises at least one of a pulse signal and a level signal.

12. The load switch (100) of claim 1, further comprising a button (110) coupled to the control circuit (102); and
wherein the control circuit (102) is further configured to generate the second control signal based on a pressing state of the button (110).

## Patentansprüche

1. Lastschalter (100), umfassend:
eine drahtlose Übertragungsschaltung (101), die so konfiguriert ist, dass sie ein erstes Steuersignal in Reaktion auf ein Steuerbefehlssignal von einer Fernvorrichtung (300) erzeugt;
eine Steuerschaltung (102), die mit der drahtlosen Übertragungsschaltung (101) gekoppelt und so konfiguriert ist, dass sie als Reaktion auf einen Empfang des ersten Steuersignals von der drahtlosen Übertragungsschaltung (101) ein zweites Steuersignal erzeugt;
eine Umschaltschaltung (103), die mit der Steuerschaltung (102) gekoppelt ist und ein Relais (1031) umfasst, das in einer Schaltung (201) angeordnet ist, wobei die Umschaltschaltung (103) so konfiguriert ist, dass sie einen Zustand der Schaltung (201) durch Steuern von Kontakten des Relais (1031) in Reaktion auf einen Empfang des zweiten Steuersignals steuert, **dadurch gekennzeichnet, dass**
der Lastschalter (100) ferner eine Schaltungszustandsdetektionsschaltung (104) umfasst, die mit der Schaltung (201) und der Steuerschaltung (102) gekoppelt und so konfiguriert ist, dass sie einen Wert der Spannung oder des Stroms an der Schaltung (201) erhält und ein Signal bezüglich des Zustands der Schaltung (201), der einen Zustand des Schmelzverschweißens von Kontakten des Relais (1031) einschließt, an die Steuerschaltung (102) gemäß dem erhaltenen Wert der Spannung oder des Stroms liefert.

2. Lastschalter (100) nach Anspruch 1, wobei das Relais (1031) ein bistabiles Relais umfasst, das Kurzschlussströmen standhalten kann.

3. Lastschalter (100) nach Anspruch 1, ferner umfassend eine Zustandsanzeigeschaltung (105), die mit der Steuerschaltung (102) gekoppelt und so konfiguriert ist, dass sie mindestens eines von dem Zustand der Schaltung (201), einem Betriebszustand der drahtlosen Übertragungsschaltung (101) und Zuständen der Kontakte angibt.

4. Lastschalter (100) nach Anspruch 1, ferner umfassend eine Messkomponente (106), wobei die Messkomponente (106) umfasst:
eine Erfassungsschaltung (1061), die mit der Schaltung (201) gekoppelt und so konfiguriert ist, dass sie mindestens eines von Spannung und Strom an der Schaltung (201) erfasst und ein entsprechendes Analogsignal erzeugt;
eine Analog-Digital-Wandlerschaltung (1062), die mit der Erfassungsschaltung (1061) gekoppelt und so konfiguriert ist, dass sie das Analogsignal empfängt und ein Signal erzeugt, das mindestens eines von Spannung und Strom in Form eines digitalen Signals anzeigt.

5. Lastschalter (100) nach Anspruch 4, wobei die Messkomponente ferner eine Anzeigeeinheit (1063) umfasst, die mit der Analog-Digital-Wandlerschaltung (1062) gekoppelt und so konfiguriert ist, dass sie das digitale Signal anzeigt.

6. Lastschalter (100) nach Anspruch 4, wobei die Erfassungsschaltung (1061) eine mit der Schaltung (201) gekoppelte Strommessspule umfasst.

7. Lastschalter (100) nach Anspruch 1, ferner mit einer Kontaktzustandsdetektionsschaltung (107), die mit dem Relais (1031) gekoppelt und so konfiguriert ist, dass sie Werte von Widerständen der Kontakte erhält und ein Signal bezüglich der Zustände der Kontakte entsprechend dem erhaltenen Wert des Widerstands erzeugt.

8. Lastschalter (100) nach Anspruch 7, wobei die Kontaktzustandsdetektionsschaltung (107) einen Temperatursensor umfasst, der mit den Kontakten gekoppelt und so konfiguriert ist, dass er den Wert des Widerstands durch Detektieren von Temperaturen der Kontakte erhält.

9. Lastschalter (100) nach Anspruch 1, ferner mit einer Signalverstärkungsschaltung (108), die zwischen die Steuerschaltung (102) und die Umschaltschaltung (103) gekoppelt und so konfiguriert ist, dass sie das zweite Steuersignal verstärkt, um die Kontakte des Relais (1031) mit dem verstärkten zweiten Steuersignal zu steuern.

10. Lastschalter (100) nach Anspruch 1, ferner mit einer drahtgebundenen Übertragungsschaltung (109), die mit der Schaltung (201) und der Steuerschaltung (102) über eine Verbindungsleitung gekoppelt ist und eine Schalteinheit (1091) umfasst, die ein drittes Steuersignal erzeugen kann, und wobei die Steuerschaltung (102) ferner so konfiguriert ist, dass sie das zweite Steuersignal in Reaktion auf einen Empfang des dritten Steuersignals von der drahtgebundenen Übertragungsschaltung (109) erzeugt.

11. Lastschalter (100) nach Anspruch 10, wobei das zweite Steuersignal oder das dritte Steuersignal mindestens eines von einem Impulssignal und einem Pegelsignal umfasst.

12. Lastschalter (100) nach Anspruch 1, ferner umfassend eine Taste (110), die mit der Steuerschaltung (102) gekoppelt ist; und
wobei die Steuerschaltung (102) ferner so konfiguriert ist, dass sie das zweite Steuersignal auf der Grundlage eines gedrückten Zustands der Taste (110) erzeugt.

## Revendications

1. Commutateur de charge (100), comprenant :
un circuit de transmission sans fil (101) configuré pour générer un premier signal de commande en réponse à un signal d'ordre de commande provenant d'un dispositif distant (300) ;
un circuit de commande (102) couplé au circuit de transmission sans fil (101) et configuré pour générer un deuxième signal de commande en réponse à une réception du premier signal de commande provenant du circuit de transmission sans fil (101) ;
un circuit de commutation (103) couplé au circuit de commande (102) et comprenant un relais (1031) disposé dans un circuit (201), le circuit de commutation (103) étant configuré pour commander un état du circuit (201) en commandant les contacts du relais (1031) en réponse à la réception du deuxième signal de commande,
**caractérisé en ce que**
le commutateur de charge (100) comprend en outre un circuit de détection d'état de circuit (104) couplé au circuit (201) et au circuit de commande (102), et configuré pour obtenir une valeur de tension ou de courant sur le circuit (201) et fournir un signal concernant l'état du circuit (201), y compris un état de soudage par fusion des contacts du relais (1031), au circuit de commande (102) en fonction de la valeur obtenue de la tension ou du courant.

2. Commutateur de charge (100) selon la revendication 1, dans lequel le relais (1031) comprend un relais bistable capable de supporter des courants de court-circuit.

3. Commutateur de charge (100) selon la revendication 1, comprenant en outre un circuit d'indication d'état (105) couplé au circuit de commande (102) et configuré pour indiquer l'état du circuit (201) et/ou un état de fonctionnement du circuit de transmission sans fil (101) et/ou des états des contacts.

4. Commutateur de charge (100) selon la revendication 1, comprenant en outre un composant de mesure (106), le composant de mesure (106) comprenant :
un circuit d'acquisition (1061) couplé au circuit (201) et configuré pour acquérir une tension et/ou un courant sur le circuit (201) et générer un signal analogique correspondant ;
un circuit de conversion analogique-numérique (1062) couplé au circuit d'acquisition (1061) et configuré pour recevoir le signal analogique et générer un signal indicatif de la tension et/ou du courant sous la forme d'un signal numérique.

5. Commutateur de charge (100) selon la revendication 4, dans lequel le composant de mesure comprend en outre une unité d'affichage (1063) couplée au circuit de conversion analogique-numérique (1062) et configurée pour afficher le signal numérique.

6. Commutateur de charge (100) selon la revendication 4, dans lequel le circuit d'acquisition (1061) comprend une bobine de mesure de courant couplée au circuit (201).

7. Commutateur de charge (100) selon la revendication 1, comprenant en outre un circuit de détection d'état de contacts (107) couplé au relais (1031) et configuré pour obtenir des valeurs de résistances des contacts et générer un signal concernant les états des contacts en fonction de la valeur obtenue de la résistance.

8. Commutateur de charge (100) selon la revendication 7, le circuit de détection d'état de contacts (107) comprenant un capteur de température couplé aux contacts et configuré pour obtenir la valeur de la résistance en détectant les températures des contacts.

9. Commutateur de charge (100) selon la revendication 1, comprenant en outre un circuit d'amplification de signal (108) couplé entre le circuit de commande (102) et le circuit de commutation (103) et configuré pour amplifier le deuxième signal de commande pour commander les contacts du relais (1031) avec le deuxième signal de commande amplifié.

10. Commutateur de charge (100) selon la revendication 1, comprenant en outre un circuit de transmission câblé (109) couplé au circuit (201) et au circuit de commande (102) par une ligne de connexion et comprenant une unité de commutation (1091) capable de générer un troisième signal de commande, et
dans lequel le circuit de commande (102) est en outre configuré pour générer le deuxième signal de commande en réponse à une réception du troisième signal de commande provenant du circuit de transmission câblé (109).

11. Commutateur de charge (100) selon la revendication 10, dans lequel le deuxième signal de commande ou le troisième signal de commande comprend un signal impulsionnel et/ou un signal de niveau.

12. Commutateur de charge (100) selon la revendication 1, comprenant en outre un bouton (110) couplé au circuit de commande (102) ; et
dans lequel le circuit de commande (102) est en outre configuré pour générer le deuxième signal de commande sur la base d'un état d'appui du bouton (110).
